# FASCICULE DE BREVET EUROPEEN

(11) **EP 4 301 638 B1**
(45) Date de publication et mention de la délivrance du brevet: **26.08.2026**
(21) Numéro de dépôt: 22709325.9
(22) Date de dépôt: 03.03.2022
(51) Int. Cl.: B60T 7/02, B60T 7/04, B60T 7/08, B60T 7/12, B60T 8/17, B60T 8/176, B60T 8/1761, B60T 8/32, B60T 8/44, B60T 8/48, B60T 8/50, B60T 8/88, B60T 8/92, B60T 11/10, B60T 13/10, B60T 13/66, B60T 13/74, B60T 17/22

(54) **SYSTÈME DE FREINAGE POUR VÉHICULE AUTOMOBILE**
BREMSANLAGE FÜR EIN KRAFTFAHRZEUG
BRAKING SYSTEM FOR A MOTOR VEHICLE

(30) Priorité: 03.03.2021 FR 2102051
(43) Date de publication de la demande: 10.01.2024
(73) Titulaire: Astemo France, 93700 Drancy (FR)
(72) Inventeur: AKOURTAM, Samy, 92220 BAGNEUX (FR); RAMIREZ HERNANDEZ, Carlos Eduardo, 92130 ISSY LES MOULINEAUX (FR); DELMEIRE, Dimitri, 95130 FRANCONVILLE (FR); RAMDANE, Abdessamed, 60000 BEAUVAIS (FR)
(74) Mandataire: LLR
(86) Numéro de dépôt international: PCT/EP2022/055427
(87) Numéro de publication internationale: WO 2022/184838

(56) Documents cités:
- WO-A1-2018/229411
- WO-A1-2020/128358
- DE-A1- 102009 046 238
- DE-A1- 102011 084 534
- DE-A1- 102017 218 488
- DE-A1- 102018 212 637
- DE-T5- 112018 005 541
- FR-A1- 2 755 416
- FR-A1- 2 843 341
- FR-A1- 2 936 206
- FR-A1- 3 023 814

## Description

L'invention se rapporte au domaine du freinage de véhicule automobile.

On connaît déjà dans l'état la technique, un système de freinage pour véhicule automobile comportant par exemple un circuit principal hydraulique de freinage, un circuit électrique auxiliaire de freinage et un organe manuel de freinage.

Le circuit principal hydraulique de freinage est par exemple commandé par un dispositif électronique de commande, également appelé amplificateur électrique de freinage ou en langue anglaise « Electric Brake Booster », permettant d'amplifier la pression hydraulique de freinage en facilitant la pression à exercer lors d'une commande manuelle de freinage par appui sur une pédale de frein, ou lors d'une commande automatique de freinage issue d'une unité centrale de gestion de la conduite du véhicule automobile, comme par exemple dans le cas d'un véhicule autonome. Le circuit hydraulique de freinage commande des actionneurs hydrauliques d'organes de freinage, tels que des pistons hydrauliques.

Le circuit électrique auxiliaire de freinage assure une fonction de frein électrique de stationnement ou en langue anglaise « Electric Parking Brake », et même de préférence de frein automatique de stationnement ou en langue anglaise « Automatic Parking Brake ». Ce circuit électrique auxiliaire de freinage commande des actionneurs électriques d'organes de freinage.

Les organes de freinage actionnés hydrauliquement et/ou électriquement sont configurés pour freiner les roues du véhicule automobile. Pour cela, chaque organe de freinage comprend par exemple un étrier de frein comportant des moyens de friction, comme par exemple des plaquettes de frein, qu'il entraîne en direction d'éléments de freinage chacun solidaire d'une roue du véhicule, comme par exemple des disques de frein. Par exemple, la fonction de frein électrique de stationnement du circuit électrique auxiliaire de freinage est activée, respectivement désactivée, par appui sur un bouton d'activation.

L'organe manuel de freinage se présente par exemple sous la forme d'une pédale et/ou d'un levier, et exerce une action directe sur des organes de freinage, par exemple sous la forme d'un frein à main via un câble de frein. De manière complémentaire, afin d'assurer une fonction de frein de stationnement, l'organe manuel de freinage exerce une action sur la transmission du véhicule automobile, comme un cliquet de stationnement sur une boîte automatique de transmission (cas d'un frein de stationnement connu sous le nom « parking pawl ») ou l'engagement d'une vitesse sur une boîte de vitesses à transmission manuelle.

Par ailleurs, le dispositif électronique de commande est par exemple configuré pour commander le circuit hydraulique de freinage, non seulement pour assurer la fonction principale de freinage hydraulique du véhicule automobile, mais également pour assurer certaines fonctions dynamiques de freinage, telles que la fonction d'antiblocage des roues - également connue sous le sigle ABS pour « Antiblokiersystem » en allemand - ou de contrôle électronique de la stabilité en vue d'un contrôle électronique de trajectoire - également connue sous le sigle ESP pour « Electronic Stability Program » en anglais ou encore ESC pour « Electronic Stability Control » en anglais.

En cas de défaillance du circuit principal hydraulique de freinage, l'organe manuel de freinage permet d'assurer un freinage dynamique - également appelé freinage de roulage - de secours. En cas de défaillance du circuit électrique auxiliaire de freinage, l'organe manuel de freinage permet également d'assurer un freinage de stationnement de secours. Un tel organe manuel de freinage assure ainsi une redondance dans le système de freinage, renforçant la sécurité. Toutefois, certains véhicules automobiles, comme par exemple des véhicules automobiles autonomes, ne comprennent pas forcément un tel organe manuel de freinage. Par ailleurs, on connaît, notamment des documents WO2018/229411A1 ou WO2020/128358, un véhicule routier comprenant une unité de commande du véhicule et un système de freinage comprenant un frein de service et un frein de stationnement. L'unité de commande est configurée pour piloter le véhicule à l'aide du frein de service et pour commander le frein de stationnement dans un état actif en cas de défaillance du frein de service.

L'invention a pour but de fournir un système de freinage pour véhicule automobile permettant d'obtenir automatiquement un freinage de stationnement de secours, voire un freinage de roulage de secours, en cas de défaillance du système de freinage, et ce indépendamment de la présence d'un organe manuel de freinage.

A cet effet, l'invention a pour objet un système de freinage pour véhicule automobile, comprenant :
- un circuit principal de freinage,
- un circuit électrique auxiliaire de freinage configuré pour assurer un freinage de stationnement,
- un premier dispositif électronique de commande, lequel commande
   i) le circuit principal de freinage pour actionner un premier organe de freinage et un deuxième organe de freinage, et
   ii) dans le circuit électrique auxiliaire de freinage, un premier actionneur électrique du premier organe de freinage, et
- un deuxième dispositif électronique de commande, lequel commande, dans le circuit électrique auxiliaire de freinage, un deuxième actionneur électrique du deuxième organe de freinage.

Ainsi, en cas de défaillance du circuit électrique auxiliaire du fait d'une défaillance du premier dispositif électronique de commande ou du deuxième dispositif électronique de commande, un tel système de freinage permet de garantir l'actionnement électrique d'un organe de freinage. Ainsi, il n'est pas nécessaire de prévoir forcément un organe manuel de freinage, ce qui est particulièrement intéressant dans le cas d'un véhicule autonome. En effet, le circuit électrique auxiliaire de freinage garantit un freinage de stationnement même lors d'une défaillance du premier dispositif électronique de commande ou du deuxième dispositif électronique de commande, voire permet de réaliser un frein de roulage de secours dans le cas d'une défaillance du circuit principal de freinage.

On notera qu'il est particulièrement intéressant de pouvoir se passer d'un organe manuel de freinage dans le système proposé, par exemple de type cliquet de stationnement sur une boîte automatique de transmission, du fait que cela permet de diminuer le coût du système de freinage.

Suivant d'autres caractéristiques optionnelles du système de freinage, prises seules ou en combinaison :
- Le premier dispositif électronique de commande commande des actionneurs du circuit principal de freinage, lesquels actionnent les premier et deuxième organes de freinage. Par exemple, chaque organe de freinage comprend un étrier de frein comportant des moyens de friction, comme par exemple des plaquettes de frein, qu'il entraîne en direction d'un rotor, comme un élément de freinage solidaire d'une roue du véhicule automobile, par exemple un disque de frein. Par exemple, chaque actionneur du circuit principal de freinage comprend un piston hydraulique entraînant un étrier de frein.
- Le système de freinage, via les actionneurs du circuit principal de freinage et les premier et deuxième actionneurs électriques, entraîne les premier et deuxième organes de freinage.
- Chaque organe de freinage comprend des moyens de friction avec un rotor, comme un élément de freinage solidaire d'une roue du véhicule automobile, de préférence les moyens de friction étant des plaquettes de frein et l'élément de freinage étant un disque de frein.
- Le premier dispositif électronique de commande convertit une commande de freinage en grandeurs de commande pour les actionneurs du circuit principal de freinage et le premier actionneur électrique, voire pour le deuxième actionneur électrique.
- Les grandeurs de commande sont adaptées aux actionneurs et sont choisies dans le groupe comprenant des signaux électriques, des grandeurs de pression hydraulique et des grandeurs de pression pneumatique.
- Le deuxième dispositif électronique de commande convertit une commande de freinage en signaux électriques pour le deuxième actionneur électrique, voire pour le premier actionneur électrique.
- La commande de freinage est une commande manuelle d'un conducteur ou une commande automatique issue d'une unité centrale de gestion de la conduite du véhicule automobile. Le cas d'une commande automatique est très intéressant dans le cas d'un véhicule autonome.
- Le premier dispositif électronique de commande commande le circuit principal de freinage pour actionner en outre un troisième et un quatrième organes de freinage.
- Le premier dispositif électronique de commande comprend un moteur électrique actionnant un maître-cylindre dans le circuit principal de freinage, le moteur électrique étant commandé par le premier dispositif électronique de commande.
- Le système de freinage comporte :
   un premier commutateur comportant une entrée primaire reliée au premier dispositif électronique de commande et une sortie reliée au premier actionneur électrique du premier organe de freinage, le premier commutateur comportant une entrée de secours reliée au deuxième dispositif électronique de commande, le premier commutateur étant configuré pour relier, en cas de défaillance du premier dispositif électronique de commande, le deuxième dispositif électronique de commande au premier actionneur électrique du premier organe de freinage, et
   un deuxième commutateur comportant une entrée primaire reliée au deuxième dispositif électronique de commande et une sortie reliée au deuxième actionneur électrique du deuxième organe de freinage, le deuxième commutateur comportant une entrée de secours reliée au premier dispositif électronique de commande, le deuxième commutateur étant configuré pour relier, en cas de défaillance du deuxième dispositif électronique de commande, le premier dispositif électronique de commande au deuxième actionneur électrique du deuxième organe de freinage.

Ainsi, en cas de défaillance du premier dispositif électronique de commande, l'intégralité du freinage électrique est maintenue grâce à la commutation du premier commutateur électrique depuis le premier dispositif électronique de commande vers le deuxième dispositif électronique de commande. En cas de défaillance du deuxième dispositif électronique de commande, l'intégralité du freinage électrique est maintenue grâce à la commutation du deuxième commutateur électrique depuis le deuxième dispositif électronique de commande vers le premier dispositif électronique de commande. Ainsi, un freinage électrique est réalisé de façon particulièrement sécurisée, notamment un freinage de stationnement qui permet alors de maintenir un véhicule stationné sur une pente allant jusqu'à 30%, notamment du fait que le freinage de stationnement est assuré sur au moins deux roues du véhicule automobile, grâce à la combinaison de deux organes de freinage actionnés électriquement. Cela permet d'obtenir une redondance de la fonction de frein de stationnement et améliore ainsi la sécurité du véhicule automobile en matière de freinage de stationnement. En fonctionnement normal, la fonction de frein de stationnement est de préférence réalisée automatiquement, en étant activée dès la mise hors contact du véhicule automobile ou en cas de démarrage en côte. Ainsi, le système de freinage assure une fonction de frein automatique de stationnement. Dans ce cas, même en cas de défaillance du premier dispositif électronique de commande ou du deuxième dispositif électronique de commande, la fonction de frein automatique de stationnement est quand même réalisée de manière optimale, par exemple du fait que dans ce cas, la fonction de gestion dynamique du freinage et de contrôle de la stabilité reste assurée.
- Le premier commutateur et le deuxième commutateur sont formés dans un même composant électronique. Ainsi, le système de freinage comporte moins de composants séparés, il est compact et facile à assembler.
- Le premier commutateur et le deuxième commutateur sont disposés sur des cartes électroniques séparées. Ainsi, la fiabilité du système de freinage est améliorée du fait qu'une défaillance de l'une des cartes électroniques n'affecte pas l'autre carte électronique.
- Le premier dispositif électronique de commande commande le premier actionneur électrique et le deuxième dispositif électronique de commande commande le deuxième actionneur électrique, pour réaliser sélectivement un freinage de stationnement et un freinage de roulage de secours. Ainsi, le circuit électrique auxiliaire de freinage garantit une fonction de frein de stationnement et assure une fonction de freinage de roulage de secours. On entend par « roulage », l'action selon laquelle le véhicule automobile est en déplacement, de préférence à une vitesse supérieure à 6 km/h. Le terme « roulage » s'oppose ici au stationnement du véhicule automobile, voire à un véhicule automobile qui s'apprête à s'arrêter spontanément du fait des frottements entre la chaussée et les roues du véhicule automobile. Ainsi, en fonctionnement normal, le circuit électrique auxiliaire assure uniquement la fonction de frein de stationnement, et en cas de défaillance du circuit principal de freinage, il assure la fonction de frein de roulage de secours. Cela produit une redondance de la fonction de frein de roulage et améliore ainsi la sécurité du véhicule automobile en matière de freinage de roulage. En fonctionnement normal, la fonction de frein de stationnement est de préférence réalisée automatiquement, en étant activée dès la mise hors contact du véhicule automobile, lorsque le moteur du véhicule automobile est arrêté, ou en cas de démarrage en côte. Ainsi, le système de freinage assure une fonction de frein automatique de stationnement, de préférence lorsque la vitesse du véhicule automobile est inférieure à 6 km/h.
- Le premier organe de freinage est configuré pour freiner une première roue du véhicule automobile, et le deuxième organe de freinage est configuré pour freiner une deuxième roue du véhicule automobile distincte de la première roue, les première et deuxième roues étant de préférence les roues arrière du véhicule automobile. Ainsi, un freinage est réalisé, notamment un freinage de stationnement, même dans le cas d'une défaillance du système de freinage, par exemple si le premier ou le deuxième dispositif électronique de commande est défaillant. Un freinage de stationnement est par exemple assuré, et ce même lorsque le véhicule doit être stationné sur une pente allant jusqu'à 8%, du fait que le freinage est assuré sur au moins une roue du véhicule automobile.
- Le système de freinage comporte un troisième organe de freinage et un quatrième organe de freinage actionnés par le circuit principal de freinage. Ils sont de préférence configurés pour chacun freiner une roue, à savoir une troisième et une quatrième roues, lesquelles sont les roues avant du véhicule.
- Le premier dispositif électronique de commande et le deuxième dispositif électronique de commande comprennent chacun une unité de traitement de signaux représentatifs de la vitesse de rotation des roues du véhicule automobile, et une unité de gestion dynamique du freinage et de contrôle électronique de la stabilité. Ainsi, le premier dispositif électronique de commande et le deuxième dispositif électronique de commande peuvent chacun assurer une fonction de contrôle du fonctionnement du système de freinage et une fonction de gestion dynamique du freinage et de contrôle de la stabilité. Ces fonctions sont par exemple choisies dans le groupe comprenant la fonction d'antiblocage des roues, la fonction de contrôle électronique de la stabilité en vue d'un contrôle électronique de trajectoire, la fonction de freinage de stationnement automatique.
- Le système de freinage comporte un capteur de vitesse de rotation sur chaque roue du véhicule automobile. Ainsi, les signaux représentatifs de la vitesse de rotation des roues du véhicule automobile sont issus de ces capteurs.
- Le circuit principal de freinage est un circuit hydraulique de freinage, lequel comporte un actionneur hydraulique pour chaque organe de freinage. Alternativement, le circuit principal de freinage est un circuit électrique de freinage, lequel comporte un actionneur électrique pour chaque organe de freinage, ces actionneurs électriques étant distincts du premier actionneur électrique et du deuxième actionneur électrique. Encore alternativement, le circuit principal de freinage est un circuit pneumatique de freinage, lequel comporte un actionneur pneumatique pour chaque organe de freinage.
- Le système de freinage comporte en outre un dispositif manuel de commande du circuit principal de freinage, le premier dispositif électronique de commande étant configuré pour assister le dispositif manuel de commande en fournissant une pression hydraulique additionnelle dans le circuit principal de freinage lorsque le dispositif manuel de commande est actionné par une commande manuelle de freinage d'un conducteur. Ainsi, le système de freinage permet de réaliser facilement un freinage via une commande manuelle, par exemple dans le cas où le véhicule automobile n'est pas dans un mode autonome.
- La pression hydraulique additionnelle est fournie par un moteur électrique actionnant un maître-cylindre dans le circuit principal de freinage, le moteur électrique étant commandé par le premier dispositif électronique de commande. Un tel agencement forme ainsi un amplificateur électrique de freinage, également appelé « Electric Brake Booster » en langue anglaise.
- Le dispositif manuel de commande comprend une pédale ou un levier, lequel actionne de préférence un maître-cylindre dans le circuit principal de freinage.
- Le système de freinage comporte un bus de communication de données entre le premier dispositif électronique de commande et le deuxième dispositif électronique de commande. Ainsi, le premier dispositif électronique de commande et le deuxième dispositif de commande échangent des données entre eux, ce qui permet d'optimiser le freinage.
- Le bus de communication de données est de type multiplexé, de préférence de type CAN, et présente préférentiellement une vitesse de transmission de données d'au moins 500 kbit/s. Ainsi, cela permet d'obtenir simplement une bonne synchronisation entre le premier dispositif électronique de commande et le deuxième dispositif électronique de commande, afin de permettre un freinage correctement synchronisé.
- Le système de freinage comporte une liaison analogique reliant les premier et deuxième commutateurs électriques aux premier et deuxième dispositifs électroniques de commande. Ainsi, le premier dispositif électronique de commande et le deuxième dispositif électronique de commande sont reliés aux premier et deuxième commutateurs électriques. Cela permet à ces derniers de commander facilement les premier et deuxième commutateurs électriques lors d'une défaillance du premier dispositif électronique de commande ou du deuxième dispositif électronique de commande. De façon alternative, c'est le bus de communication de données qui relie les premier et deuxième commutateurs électriques aux premier et deuxième dispositifs électroniques de commande. Ainsi, le premier dispositif électronique de commande et le deuxième dispositif électronique de commande sont reliés aux premier et deuxième commutateurs électriques. Cela permet au premier dispositif électronique de commande, respectivement au deuxième dispositif électronique de commande, de commander facilement les premier et deuxième commutateurs électriques lors d'une défaillance du deuxième dispositif électronique de commande, respectivement du premier dispositif électronique de commande.
- Le deuxième dispositif électronique de commande est configuré pour détecter une défaillance du premier dispositif électronique de commande et le premier dispositif électronique de commande est configuré pour détecter une défaillance du deuxième dispositif électronique de commande.
- Les premier et deuxième dispositifs électroniques de commande comprennent chacun une unité électronique de surveillance, laquelle est configurée pour détecter une défaillance du circuit principal de freinage, de préférence sur la base de signaux représentatifs de la vitesse de rotation des roues du véhicule automobile.
- Le premier dispositif électronique de commande et le deuxième dispositif électronique de commande sont indépendants. Ainsi, la défaillance de l'un des dispositifs électroniques de commande n'entraîne pas la défaillance ou une altération du fonctionnement de l'autre des dispositifs électroniques de commande.
- Le deuxième dispositif électronique de commande commande uniquement le circuit auxiliaire de freinage. Ainsi, le système de freinage est réalisé avec une conception optimisée.
- Le deuxième dispositif électronique de commande ne commande pas le circuit principal de freinage. Ainsi, le circuit principal de freinage n'est pas complexifié, le système de freinage étant par conséquent réalisé avec une conception optimisée.

L'invention a également pour objet un véhicule automobile, de préférence autonome, comportant un système de freinage tel que décrit précédemment.

L'invention a encore pour objet un procédé de commande d'un véhicule automobile tel que décrit précédemment ou d'un système de freinage tel que décrit précédemment, dans lequel lors d'une étape de commande de freinage :
- lorsqu'une défaillance du circuit principal de freinage est détectée, le premier dispositif électronique de commande applique une étape de commande de secours du premier actionneur électrique et le deuxième dispositif électronique de commande applique une étape de commande de secours du deuxième actionneur électrique.

Suivant une caractéristique optionnelle du procédé de commande :
- L'étape de détection d'une défaillance du circuit principal de freinage est réalisée par le premier dispositif électronique de commande et/ou par le deuxième dispositif électronique de commande.

L'invention a encore pour objet un procédé de commande tel que décrit précédemment ou d'un véhicule automobile tel que décrit précédemment ou d'un système de freinage tel que décrit précédemment, dans lequel lors d'une étape de commande de freinage :
- lorsqu'une défaillance du premier dispositif électronique de commande est détectée, le deuxième dispositif électronique de commande applique une étape de commande de secours du premier actionneur électrique,
- lorsqu'une défaillance du deuxième dispositif électronique de commande est détectée, le premier dispositif électronique de commande applique une étape de commande de secours du deuxième actionneur électrique.

Suivant d'autres caractéristiques optionnelles du procédé de commande, prises seules ou en combinaison :
- L'étape de détection d'une défaillance du premier dispositif électronique de commande est réalisée par le deuxième dispositif électronique de commande.
- L'étape de détection d'une défaillance du deuxième dispositif électronique de commande est réalisée par le premier dispositif électronique de commande.

### Brève description des figures

L'invention sera mieux comprise à la lecture de la description qui va suivre donnée uniquement à titre d'exemple et faite en se référant aux dessins annexés dans lesquels :
[Fig. 1] la figure 1 est une vue schématique d'un véhicule automobile comportant un système de freinage ;
[Fig. 2] la figure 2 est une vue schématique d'un système de freinage selon un premier mode de réalisation ;
[Fig. 3] la figure 3 est une vue schématique d'une partie du système de freinage selon le premier mode de réalisation ;
[Fig. 4] la figure 4 est une vue schématique d'un système de freinage selon un deuxième mode de réalisation ;
[Fig. 5] la figure 5 est une vue schématique d'un système de freinage selon un troisième mode de réalisation ;
[Fig. 6] la figure 6 est une vue schématique d'un système de freinage selon un quatrième mode de réalisation ;
[Fig. 7] la figure 7 est un diagramme illustrant un premier exemple de procédé de commande ;
[Fig. 8] la figure 8 est un diagramme illustrant un deuxième exemple de procédé de commande.

### Description détaillée

Sur toutes les figures, les mêmes références se rapportent aux mêmes éléments.

Dans cette description détaillée, les réalisations suivantes sont des exemples. Bien que la description se réfère à un ou plusieurs modes de réalisation, cela ne signifie pas que les caractéristiques s'appliquent seulement à un seul mode de réalisation. De simples caractéristiques de différents modes de réalisation peuvent également être combinées et/ou interchangées pour fournir d'autres réalisations.

Dans la présente description désigne certains éléments ou organes par des noms ou expressions, comme par exemple « premier organe de frein » ou « deuxième organe de frein ». Dans ce cas, il s'agit de désignations pour différencier et dénommer des éléments ou organes non identiques. Ces désignations n'impliquent pas une priorité ou une hiérarchie d'un élément (ou d'un organe) par rapport à un autre et il est aisément possible d'interchanger de telles dénominations sans sortir du cadre de la présente description. Ces désignations n'impliquent pas non plus un ordre dans le temps par exemple pour apprécier tels ou tels critères.

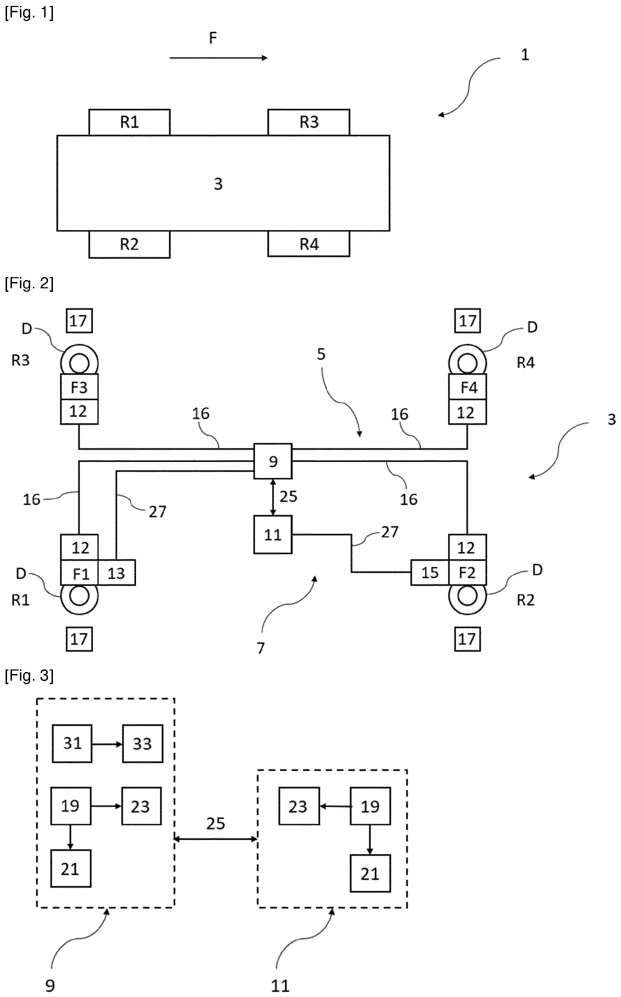

La figure 1 représente schématiquement un véhicule automobile 1, par exemple autonome, comportant un système de freinage 3 et quatre roues R1, R2, R3, R4. Deux roues R1, R2 sont les roues arrière, et deux roues R3, R4 sont les roues avant, considérées dans le sens normal de déplacement du véhicule automobile 1 en marche avant, représenté par la flèche F.

La figure 2 représente schématiquement un système de freinage 3 selon un premier mode de réalisation. Le système de freinage 3 comprend un circuit principal de freinage 5 et un circuit électrique auxiliaire de freinage 7. Le circuit électrique auxiliaire de freinage 7 est configuré pour assurer un freinage de stationnement. Le système de freinage 3 comprend en outre un premier dispositif électronique de commande 9 et un deuxième dispositif électronique de commande 11. Le premier dispositif électronique de commande 9 et le deuxième dispositif électronique de commande 11 sont des composants distincts dans le système de freinage 3. En d'autres termes, le premier dispositif électronique de commande 9 et le deuxième dispositif électronique de commande 11 sont indépendants.

Dans cet exemple, le système de freinage 3 comprend un premier organe de freinage F1, un deuxième organe de freinage F2, un troisième organe de freinage F3 et un quatrième organe de freinage F4. Le premier organe de freinage F1 est configuré pour freiner la roue arrière R1, le deuxième organe de freinage F2 est configuré pour freiner la roue arrière R2, le troisième organe de freinage F3 est configuré pour freiner la roue avant R3 et le quatrième organe de freinage F4 est configuré pour freiner la roue avant R4. Le premier dispositif électronique de commande 9 commande le circuit principal de freinage 5 pour actionner le premier organe de freinage F1 et le deuxième organe de freinage F2. A cet effet, le premier dispositif électronique de commande 9 commande des actionneurs 12 du circuit principal de freinage 5, lesquels actionnent le premier organe de freinage F1, le deuxième organe de freinage F2, le troisième organe de freinage F3 et le quatrième organe de freinage F4. Chaque organe de freinage F1-F4 comprend un étrier de frein comportant des moyens de friction, comme par exemple des plaquettes de frein, qu'il entraîne en direction d'un rotor, comme un élément de freinage D solidaire d'une roue R1-R4 du véhicule automobile, par exemple un disque de frein. Dans cet exemple, le système de freinage 3 est un circuit hydraulique de freinage, lequel comporte un actionneur 12 hydraulique pour chaque organe de freinage F1-F4. Par exemple, chaque actionneur 12 du circuit principal de freinage 5 comprend un piston hydraulique entraînant un étrier de frein. Le premier dispositif électronique de commande 9 comprend un moteur électrique 31 actionnant un maître-cylindre 33 dans le circuit principal de freinage 5, le moteur électrique 31 étant commandé par le premier dispositif électronique de commande. Le circuit principal de freinage 5 comporte ainsi des conduits hydrauliques 16 reliant le maître-cylindre 33 du premier dispositif électronique de commande 9 aux actionneurs 12.

Dans une autre variante, le circuit principal de freinage 5 est un circuit électrique de freinage, lequel comporte un actionneur 12 électrique pour chaque organe de freinage F1-F4, ces actionneurs 12 électriques étant distincts d'actionneurs électriques du circuit électrique auxiliaire de freinage 7. Dans une autre variante, le circuit principal de freinage 5 est un circuit pneumatique de freinage, lequel comporte un actionneur 12 pneumatique pour chaque organe de freinage F1-F4.

Le circuit électrique auxiliaire de freinage 7 comporte un premier actionneur électrique 13 du premier organe de freinage F1 et un deuxième actionneur électrique 15 du deuxième organe de freinage F2. Le premier dispositif électronique de commande 9 commande, dans le circuit électrique auxiliaire de freinage 7, le premier actionneur électrique 13 du premier organe de freinage F1. Ainsi, le premier dispositif électronique de commande 9 convertit une commande de freinage en grandeurs de commande pour les actionneurs 12 du circuit principal de freinage 5 et le premier actionneur électrique 13. La commande de freinage est une commande manuelle d'un conducteur ou une commande automatique issue d'une unité centrale de gestion de la conduite du véhicule automobile. Les grandeurs de commande sont adaptées aux actionneurs et sont choisies dans le groupe comprenant des signaux électriques, des grandeurs de pression hydraulique et des grandeurs de pression pneumatique. Dans cet exemple où le système de freinage 3 est un circuit hydraulique de freinage, la grandeur de commande pour les actionneurs 12 est une grandeur de pression hydraulique, et la grandeur de commande pour le premier actionneur électrique 13 est un signal électrique.

Le deuxième dispositif électronique de commande 11 commande, dans le circuit électrique auxiliaire de freinage 7, le deuxième actionneur électrique 15 du deuxième organe de freinage F2. Le deuxième dispositif électronique de commande 11 convertit une commande de freinage en signaux électriques pour le deuxième actionneur électrique 15. Le deuxième dispositif électronique de commande 9 commande uniquement le circuit auxiliaire de freinage 7. En d'autres termes, le deuxième dispositif électronique de commande 11 ne commande pas le circuit principal de freinage 5.

Ainsi, le système de freinage 3, via les actionneurs 12 du circuit principal de freinage 5, le premier actionneur électrique 13 et le deuxième actionneur électrique 15, entraîne le premier organe de freinage F1 et le deuxième organe de freinage F2.

Le système de freinage 3 comporte un capteur de vitesse de rotation 17 sur chaque roue R1-R4 du véhicule automobile.

Comme représenté sur la figure 3, le premier dispositif électronique de commande 9 et le deuxième dispositif électronique de commande 11 comprennent chacun une unité de traitement 19 de signaux représentatifs de la vitesse de rotation des roues R1-R4 du véhicule automobile 1, une unité de gestion dynamique du freinage et de contrôle électronique de la stabilité 21 et une unité de surveillance 23. Ainsi, le premier dispositif électronique de commande 9 et le deuxième dispositif électronique de commande 11 sont chacun en mesure d'assurer une fonction de contrôle du fonctionnement du système de freinage et une fonction de gestion dynamique du freinage et de contrôle de la stabilité. Ces fonctions sont par exemple choisies dans le groupe comprenant la fonction d'antiblocage des roues, la fonction de contrôle électronique de la stabilité en vue d'un contrôle électronique de trajectoire, la fonction de freinage de stationnement automatique. L'unité de surveillance 23 est configurée pour détecter une défaillance du circuit principal de freinage 5, de préférence sur la base de signaux représentatifs de la vitesse de rotation des roues R1-R4 du véhicule automobile 1. Dans cet exemple, les signaux représentatifs de la vitesse de rotation des roues R1-R4 du véhicule automobile 1 sont issus des capteurs de vitesse de rotation 17.

Le premier dispositif électronique de commande 9 commande le premier actionneur électrique 13 et le deuxième dispositif électronique de commande 11 commande le deuxième actionneur électrique 15, pour réaliser sélectivement un freinage de stationnement et un freinage de roulage de secours. En fonctionnement normal, la fonction de frein de stationnement est de préférence réalisée automatiquement, par exemple simultanément par le premier dispositif électronique de commande 9 et le deuxième dispositif électronique de commande 11.

Le système de freinage 3 comporte un bus de communication de données 25 entre le premier dispositif électronique de commande 9 et le deuxième dispositif électronique de commande 11. Le bus de communication de données 25 est de type multiplexé, de préférence de type CAN, et présente préférentiellement une vitesse de transmission de données d'au moins 500 kbit/s.

Le deuxième dispositif électronique de commande 11 est configuré pour détecter une défaillance du premier dispositif électronique de commande 9 et le premier dispositif électronique de commande 9 est configuré pour détecter une défaillance du deuxième dispositif électronique de commande 11. Pour cela, l'unité de surveillance 23 du premier dispositif électronique de commande 9 est configurée pour détecter une défaillance du deuxième dispositif électronique de commande 11 par surveillance de données émises par le deuxième dispositif électronique de commande 11 et transitant par le bus de communication de données 25, et l'unité de surveillance 23 du deuxième dispositif électronique de commande 11 est configurée pour détecter une défaillance du premier dispositif électronique de commande 9 par surveillance de données émises par le premier dispositif électronique de commande 9 et transitant par le bus de communication de données 25.

En outre, l'unité de surveillance 23 du premier dispositif électronique de commande 9 et l'unité de surveillance 23 du deuxième dispositif électronique de commande 11 sont configurées pour détecter une défaillance du circuit principal de freinage 5 par surveillance de données émises par les capteurs de vitesse de rotation 17.

Le système de freinage 3 comporte des liaisons électriques 27 reliant le premier actionneur électrique 13 au premier dispositif électronique de commande 9 et reliant le deuxième actionneur électrique 15 au deuxième dispositif électronique de commande 11.

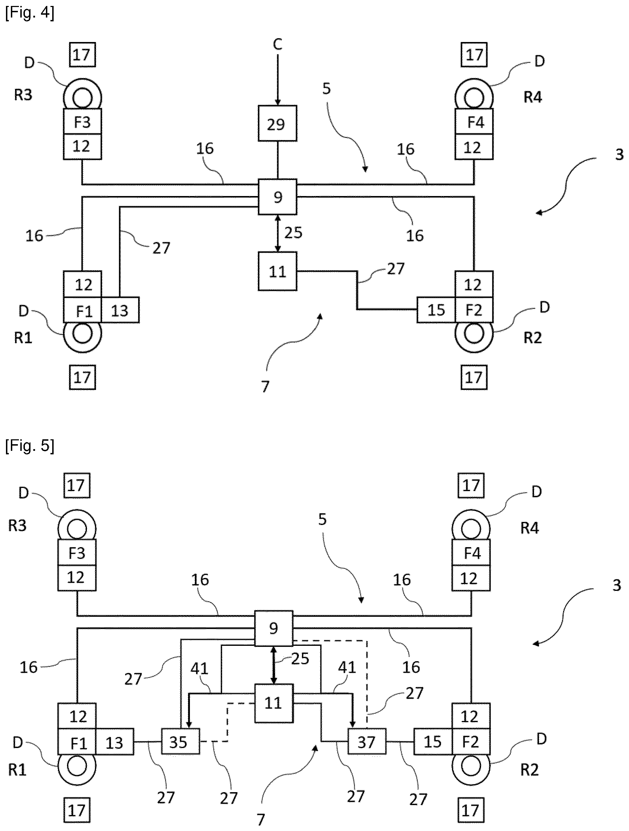

La figure 4 représente schématiquement un système de freinage 3 selon un deuxième mode de réalisation. Ce deuxième mode de réalisation se distingue du premier mode de réalisation représenté sur la figure 2 en ce que le système de freinage 3 comporte en outre un dispositif manuel de commande 29 du circuit principal de freinage 5. Le premier dispositif électronique de commande 9 est configuré pour assister le dispositif manuel de commande 29 en fournissant une pression hydraulique additionnelle dans le circuit principal de freinage 5 lorsque le dispositif manuel de commande 29 est actionné par une commande manuelle de freinage d'un conducteur C. Le dispositif manuel de commande 29 comprend une pédale ou un levier, lequel actionne le maître-cylindre 33 dans le circuit principal de freinage 5. La pression hydraulique additionnelle est fournie par le moteur électrique 31 actionnant le maître-cylindre 33 dans le circuit principal de freinage 5, le moteur électrique étant commandé par le premier dispositif électronique de commande 9.

La figure 5 représente schématiquement un système de freinage 3 selon un troisième mode de réalisation. Ce troisième mode de réalisation se distingue du premier mode de réalisation représenté sur la figure 2 en ce que le système de freinage 3 comporte un premier commutateur 35 comportant une entrée primaire reliée au premier dispositif électronique de commande 9, via une liaison électrique 27, et une sortie reliée au premier actionneur électrique 13 du premier organe de freinage F1, via une liaison électrique 27. Le premier commutateur 35 comporte une entrée de secours reliée au deuxième dispositif électronique de commande 11, via une liaison électrique 27. Le premier commutateur 35 est configuré pour relier, en cas de défaillance du premier dispositif électronique de commande 9, le deuxième dispositif électronique de commande 11 au premier actionneur électrique 13 du premier organe de freinage F1. Le système de freinage 3 comporte également un deuxième commutateur 37 comportant une entrée primaire reliée au deuxième dispositif électronique de commande 11, via une liaison électrique 27, et une sortie reliée au deuxième actionneur électrique 15 du deuxième organe de freinage F2, via une liaison électrique 27. Le deuxième commutateur 37 comporte également une entrée de secours reliée au premier dispositif électronique de commande 9, via une liaison électrique 27. Le deuxième commutateur 37 est configuré pour relier, en cas de défaillance du deuxième dispositif électronique de commande 11, le premier dispositif électronique de commande 9 au deuxième actionneur électrique 15 du deuxième organe de freinage F2. Dans ce mode de réalisation, le premier commutateur 35 et le deuxième commutateur 37 sont disposés séparément, à savoir sur des cartes électroniques séparées.

Dans le mode de réalisation représenté sur la figure 5, le système de freinage 3 comporte une liaison analogique 41 reliant le premier commutateur 35 et le deuxième commutateur 37 au premier dispositif électronique de commande 9 et au deuxième dispositif électronique de commande 11. Ainsi, le premier dispositif électronique de commande 9 et le deuxième dispositif électronique de commande 11 sont reliés au premier commutateur 35 et au deuxième commutateur 37, afin de permettre la commutation du premier commutateur 35 et du deuxième commutateur 37 vers uniquement le premier dispositif électronique de commande 9 en cas de défaillance du deuxième dispositif électronique de commande 11, et vers uniquement le deuxième dispositif électronique de commande 11 en cas de défaillance du premier dispositif électronique de commande 9. Grâce à cela, en cas de défaillance du deuxième dispositif électronique de commande 11, le premier dispositif électronique de commande 9 convertit également une commande de freinage en grandeurs de commande pour le deuxième actionneur électrique 15, via le deuxième commutateur 37. En cas de défaillance du premier dispositif électronique de commande 9, le deuxième dispositif électronique de commande 11 convertit également une commande de freinage en grandeurs de commande pour le premier actionneur électrique 13, via le premier commutateur 35.

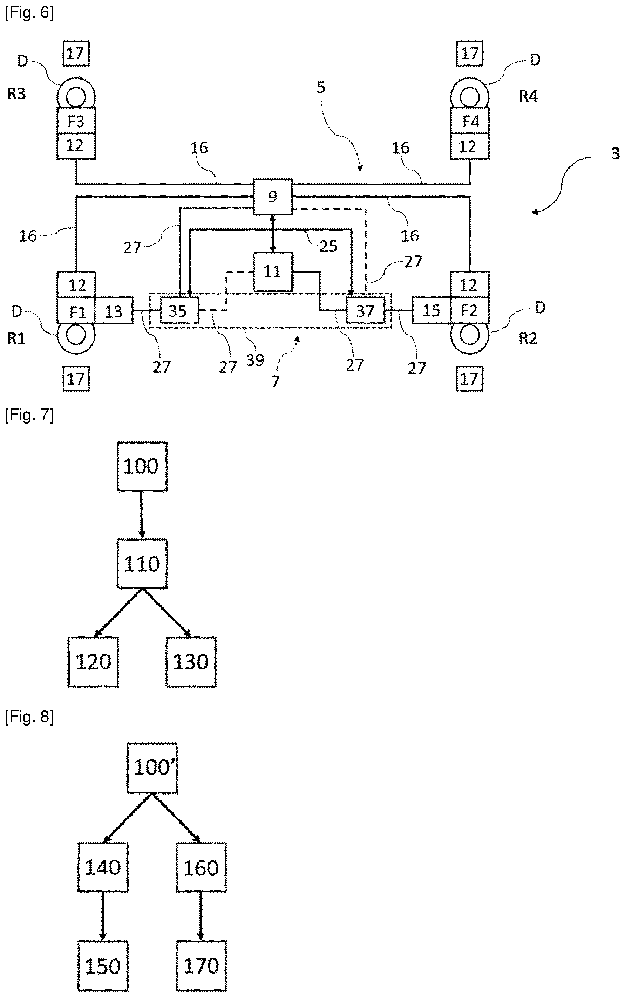

La figure 6 représente schématiquement un système de freinage 3 selon un quatrième mode de réalisation. Ce quatrième mode de réalisation se distingue du troisième mode de réalisation représenté sur la figure 5 en ce qu'alternativement à la liaison analogique 41, c'est le bus de communication de données 25 qui relie le premier commutateur 35 et le deuxième commutateur 37 au premier dispositif électronique de commande 9 et au deuxième dispositif électronique de commande 11. Ainsi, le premier dispositif électronique de commande 9 et le deuxième dispositif électronique de commande 11 sont reliés au premier commutateur 35 et au deuxième commutateur 37, afin de permettre la commutation du premier commutateur 35 et du deuxième commutateur 37 vers uniquement le premier dispositif électronique de commande 9 en cas de défaillance du deuxième dispositif électronique de commande 11, et vers uniquement le deuxième dispositif électronique de commande 11 en cas de défaillance du premier dispositif électronique de commande 9. Grâce à cela, en cas de défaillance du deuxième dispositif électronique de commande 11, le premier dispositif électronique de commande 9 convertit également une commande de freinage en grandeurs de commande pour le deuxième actionneur électrique 15, via le deuxième commutateur 37. En cas de défaillance du premier dispositif électronique de commande 9, le deuxième dispositif électronique de commande 11 convertit également une commande de freinage en grandeurs de commande pour le premier actionneur électrique 13, via le premier commutateur 35.

Par ailleurs, dans ce quatrième mode de réalisation, un agencement différent du premier commutateur 35 et du deuxième commutateur 37 est présenté. Ainsi, le premier commutateur 35 et le deuxième commutateur 37 sont disposés sur une même carte électronique, et sont de préférence formés dans un même composant électronique 39.

Un premier exemple de procédé de commande d'un véhicule automobile 1 ou d'un système de freinage 3 est décrit ci-après et est illustré sur la figure 7. Un tel procédé de commande est tel que, lors d'une étape 100 de freinage, lorsqu'une défaillance du circuit principal de freinage 5 est détectée, le premier dispositif électronique de commande 9 applique une étape 120 de commande de secours du premier actionneur électrique 13 et le deuxième dispositif électronique de commande 11 applique une étape 130 de commande de secours du deuxième actionneur électrique 15.

Dans cet exemple, l'étape 110 de détection d'une défaillance du circuit principal de freinage 5 est réalisée par le premier dispositif électronique de commande 9 et/ou par le deuxième dispositif électronique de commande 11, plus précisément via l'unité de surveillance 23 du premier dispositif électronique de commande 9 et/ou via l'unité de surveillance 23 du deuxième dispositif électronique de commande 11, lesquelles surveillent les données émises par les capteurs de vitesse de rotation 17.

Ainsi, en cas de défaillance du circuit principal de freinage 5, le premier dispositif électronique de commande 9 commande le premier actionneur électrique 13 et le deuxième dispositif électronique de commande 11 commande le deuxième actionneur électrique 15, pour réaliser un freinage de roulage de secours lorsque l'étape 100 de freinage est une étape de freinage de roulage. En cas de défaillance du circuit principal de freinage 5, il reste possible de réaliser un freinage de stationnement avec un fonctionnement normal, du fait que le premier dispositif électronique de commande 9 commande le premier actionneur électrique 13 et le deuxième dispositif électronique de commande 11 commande le deuxième actionneur électrique 15.

Un deuxième exemple de procédé de commande d'un véhicule automobile 1 ou d'un système de freinage 3 est décrit ci-après et est illustré sur la figure 8. Un tel procédé de commande, lors d'une étape 100' de freinage, comporte les étapes suivantes :
- lorsqu'une défaillance du premier dispositif électronique de commande 9 est détectée, le deuxième dispositif électronique de commande 11 applique une étape 150 de commande de secours du premier actionneur électrique 13,
- lorsqu'une défaillance du deuxième dispositif électronique de commande 11 est détectée, le premier dispositif électronique de commande 9 applique une étape 170 de commande de secours du deuxième actionneur électrique 15.

Dans cet exemple, l'étape 140 de détection d'une défaillance du premier dispositif électronique de commande 9 est réalisée par le deuxième dispositif électronique de commande 11, plus précisément via l'unité de surveillance 23 du deuxième dispositif électronique de commande 11, et l'étape 160 de détection d'une défaillance du deuxième dispositif électronique de commande 11 est réalisée par le premier dispositif électronique de commande 9, plus précisément via l'unité de surveillance 23 du premier dispositif électronique de commande 9.

Ainsi, en cas de défaillance du premier dispositif électronique de commande 9, le deuxième dispositif électronique de commande 11 commande de manière normale le deuxième actionneur électrique 15 et commande en outre le premier actionneur électrique 13 via l'étape 150 de commande de secours du premier actionneur électrique 13. Ainsi, en cas de défaillance du premier dispositif électronique de commande 9, un freinage de stationnement de secours est réalisé, du fait que le deuxième dispositif électronique de commande 11 commande le deuxième actionneur électrique 15 et le premier actionneur électrique 13.

De manière similaire, en cas de défaillance du deuxième dispositif électronique de commande 11, le premier dispositif électronique de commande 9 commande de manière normale le premier actionneur électrique 13 et commande en outre le deuxième actionneur électrique 15 via l'étape 170 de commande de secours du deuxième actionneur électrique 15. Ainsi, en cas de défaillance du deuxième dispositif électronique de commande 11, un freinage de stationnement de secours est réalisé, du fait que le premier dispositif électronique de commande 9 commande le premier actionneur électrique 13 et le deuxième actionneur électrique 15.

Selon une variante, le deuxième exemple de procédé est combiné avec le premier exemple de procédé. Dans ce cas, même en cas de défaillance du circuit principal de freinage 5 et du premier dispositif électronique de commande 9, un freinage de roulage de secours est réalisé, du fait que le deuxième dispositif électronique de commande 11 commande le deuxième actionneur électrique 15 et le premier actionneur électrique 13. En outre, même en cas de défaillance du circuit principal de freinage 5 et du deuxième dispositif électronique de commande 11, un freinage de roulage de secours est réalisé, du fait que le premier dispositif électronique de commande 9 commande le premier actionneur électrique 13 et le deuxième actionneur électrique 15.

L'invention n'est pas limitée aux modes de réalisation présentés et d'autres modes de réalisation apparaîtront clairement à l'homme du métier. Il est notamment possible de combiner les modes de réalisations entre eux lorsque cela est techniquement réalisable.

### Liste de références

- 1 :: véhicule automobile
- 3 :: système de freinage
- 5 :: circuit principal de freinage
- 7 :: circuit électrique auxiliaire de freinage
- 9 :: premier dispositif électronique de commande
- 11 :: deuxième dispositif électronique de commande
- 12 :: actionneur du circuit principal de freinage 5
- 13 :: premier actionneur électrique
- 15 :: deuxième actionneur électrique
- 16 :: conduit hydraulique
- 17 :: capteur de vitesse de rotation
- 19 :: unité de traitement
- 21 :: unité de gestion dynamique du freinage et de contrôle électronique de la stabilité
- 23 :: unité de surveillance
- 25 :: bus de communication de données
- 27 :: liaison analogique
- 29 :: dispositif manuel de commande
- 31 :: moteur électrique
- 33 :: maître-cylindre
- 35 :: premier commutateur
- 37 :: deuxième commutateur
- 39 :: composant électronique
- 41 :: liaison analogique

- F1-F4 :: organe de freinage
- D :: disque de frein

## Revendications

1. Système de freinage (3) pour véhicule automobile (1), **caractérisé en ce qu'**il comprend :
- un circuit principal de freinage (5),
- un circuit électrique auxiliaire de freinage (7) configuré pour assurer un freinage de stationnement,
- un premier dispositif électronique de commande (9), lequel commande
i) le circuit principal de freinage (5) pour actionner un premier organe de freinage (F1) et un deuxième organe de freinage (F2), et
ii) dans le circuit électrique auxiliaire de freinage (7), un premier actionneur électrique (13) du premier organe de freinage (F1), et
- un deuxième dispositif électronique de commande (11), lequel commande, dans le circuit électrique auxiliaire de freinage (7), un deuxième actionneur électrique (15) du deuxième organe de freinage (F2).

2. Système de freinage (3) selon la revendication précédente, lequel comporte :
- un premier commutateur (35) comportant une entrée primaire reliée au premier dispositif électronique de commande (9) et une sortie reliée au premier actionneur électrique (13) du premier organe de freinage (F1), le premier commutateur (35) comportant une entrée de secours reliée au deuxième dispositif électronique de commande (11), le premier commutateur (35) étant configuré pour relier, en cas de défaillance du premier dispositif électronique de commande (9), le deuxième dispositif électronique de commande (11) au premier actionneur électrique (13) du premier organe de freinage (F1), et
- un deuxième commutateur (37) comportant une entrée primaire reliée au deuxième dispositif électronique de commande (11) et une sortie reliée au deuxième actionneur électrique (15) du deuxième organe de freinage (F2), le deuxième commutateur (37) comportant une entrée de secours reliée au premier dispositif électronique de commande (9), le deuxième commutateur (37) étant configuré pour relier, en cas de défaillance du deuxième dispositif électronique de commande (11), le premier dispositif électronique de commande (9) au deuxième actionneur électrique (15) du deuxième organe de freinage (F2).

3. Système de freinage (3) selon l'une quelconque des revendications précédentes, dans lequel le premier dispositif électronique de commande (9) commande le premier actionneur électrique (13) et le deuxième dispositif électronique de commande (11) commande le deuxième actionneur électrique (15), pour réaliser sélectivement un freinage de stationnement et un freinage de roulage de secours.

4. Système de freinage (3) selon l'une quelconque des revendications précédentes, dans lequel le premier organe de freinage (F1) est configuré pour freiner une première roue (R1) du véhicule automobile, et le deuxième organe de freinage (F2) est configuré pour freiner une deuxième roue (R2) du véhicule automobile distincte de la première roue (R1), les première et deuxième roues (R1, R2) étant de préférence les roues arrière du véhicule automobile (1).

5. Système de freinage (3) selon l'une quelconque des revendications précédentes, dans lequel le premier dispositif électronique de commande (9) et le deuxième dispositif électronique de commande (11) comprennent chacun une unité de traitement (19) de signaux représentatifs de la vitesse de rotation des roues (R1-R4) du véhicule automobile (1), et une unité de gestion dynamique du freinage et de contrôle électronique de la stabilité (21).

6. Système de freinage (3) selon l'une quelconque des revendications précédentes, dans lequel le circuit principal de freinage (5) est un circuit hydraulique de freinage, lequel comporte un actionneur (12) hydraulique pour chaque organe de freinage (F1-F4).

7. Système de freinage (3) selon la revendication précédente, lequel comporte en outre un dispositif manuel de commande (29) du circuit principal de freinage (5), le premier dispositif électronique de commande (9) étant configuré pour assister le dispositif manuel de commande (29) en fournissant une pression hydraulique additionnelle dans le circuit principal de freinage (5) lorsque le dispositif manuel de commande (29) est actionné par une commande manuelle de freinage d'un conducteur (C).

8. Système de freinage (3) selon l'une quelconque des revendications précédentes, lequel comporte un bus de communication de données (25) entre le premier dispositif électronique de commande (9) et le deuxième dispositif électronique de commande (11).

9. Véhicule automobile (1), de préférence autonome, comportant un système de freinage (3) selon l'une quelconque des revendications précédentes.

10. Procédé de commande d'un véhicule automobile (1) selon la revendication précédente ou d'un système de freinage (3) selon l'une quelconque des revendications 1 à 8, dans lequel lors d'une étape (100) de commande de freinage :
- lorsqu'une défaillance du circuit principal de freinage (5) est détectée (110), le premier dispositif électronique de commande (9) applique une étape (120) de commande de secours du premier actionneur électrique (13) et le deuxième dispositif électronique de commande (11) applique une étape (130) de commande de secours du deuxième actionneur électrique (15).

11. Procédé de commande selon la revendication précédente ou d'un véhicule automobile (1) selon la revendication 9 ou d'un système de freinage (3) selon l'une quelconque des revendications 1 à 8, dans lequel lors d'une étape (100') de commande de freinage :
- lorsqu'une défaillance du premier dispositif électronique de commande (9) est détectée (140), le deuxième dispositif électronique de commande (11) applique une étape de commande de secours du premier actionneur électrique (13),
- lorsqu'une défaillance du deuxième dispositif électronique de commande (11) est détectée (160), le premier dispositif électronique de commande (9) applique une étape (170) de commande de secours du deuxième actionneur électrique (15).

## Patentansprüche

1. Bremssystem (3) für Kraftfahrzeug (1), **dadurch gekennzeichnet, dass** es umfasst:
- einen Hauptbremskreis (5),
- einen elektrischen Hilfsbremskreis (7), der dafür ausgelegt ist, eine Feststellbremsung zu bewirken,
- eine erste elektronische Steuervorrichtung (9), die
i) den Hauptbremskreis (5) steuert, um ein erstes Bremsorgan (F1) und ein zweites Bremsorgan (F2) zu betätigen, und,
ii) in dem elektrischen Hilfsbremskreis (7), einen ersten elektrischen Aktuator (13) des ersten Bremsorgans (F1) steuert, und
- eine zweite elektronische Steuervorrichtung (11), die in dem elektrischen Hilfsbremskreis (7), einen zweiten elektrischen Aktuator (15) des zweiten Bremsorgans (F2) steuert.

2. Bremssystem (3) nach dem vorhergehenden Anspruch, das Folgendes aufweist:
- einen ersten Umschalter (35), der einen Primäreingang, der mit der ersten elektronischen Steuervorrichtung (9) verbunden ist, und einen Ausgang, der mit dem ersten elektrischen Aktuator (13) des ersten Bremsorgans (F1) verbunden ist, aufweist, wobei der erste Umschalter (35) einen Noteingang aufweist, der mit der zweiten elektronischen Steuervorrichtung (11) verbunden ist, wobei der erste Umschalter (35) ausgelegt ist, um, bei einer Störung der ersten elektronischen Steuervorrichtung (9), die zweite elektronische Steuervorrichtung (11) mit dem ersten elektrischen Aktuator (13) des ersten Bremsorgans (F1) zu verbinden, und
- einen zweiten Umschalter (37), der einen Primäreingang, der mit der zweiten elektronischen Steuervorrichtung (11) verbunden ist, und einen Ausgang, der mit dem zweiten elektrischen Aktuator (15) des zweiten Bremsorgans (F2) verbunden ist, aufweist, wobei der zweite Umschalter (37) einen Noteingang aufweist, der mit der ersten elektronischen Steuervorrichtung (9) verbunden ist, wobei der zweite Umschalter (37) ausgelegt ist, um, bei einer Störung der zweiten elektronischen Steuervorrichtung (11), die erste elektronische Steuervorrichtung (9), mit dem zweiten elektrischen Aktuator (15) des zweiten Bremsorgans (F2) zu verbinden.

3. Bremssystem (3) nach einem der vorhergehenden Ansprüche, wobei die erste elektronische Steuervorrichtung (9) den ersten elektrischen Aktuator (13) steuert und die zweite elektronische Steuervorrichtung (11) den zweiten elektrischen Aktuator (15) steuert, um selektiv eine Feststellbremsung und eine Notbremsung zu realisieren.

4. Bremssystem (3) nach einem der vorhergehenden Ansprüche, wobei das erste Bremsorgan (F1) ausgelegt ist, um ein erstes Rad (R1) des Kraftfahrzeugs abzubremsen, und das zweite Bremsorgan (F2) ausgelegt ist, um ein zweites Rad (R2) des Kraftfahrzeugs abzubremsen, das von dem ersten Rad (R1) verschieden ist, wobei das erste und zweite Rad (R1, R2) bevorzugt die Hinterräder des Kraftfahrzeugs (1) sind.

5. Bremssystem (3) nach einem der vorhergehenden Ansprüche, wobei die erste elektronische Steuervorrichtung (9) und die zweite elektronische Steuervorrichtung (11) jeweils eine Einheit zur Verarbeitung (19) von Signalen, die für die Drehgeschwindigkeit der Räder (R1-R4) des Kraftfahrzeugs (1) repräsentativ sind, und eine Einheit zur dynamischen Verwaltung der Bremsung und zur elektronischen Kontrolle der Stabilität (21) umfassen.

6. Bremssystem (3) nach einem der vorhergehenden Ansprüche, wobei der Hauptbremskreis (5) ein hydraulischer Bremskreis ist, der einen hydraulischen Aktuator (12) für jedes Bremsorgan (F1-F4) aufweist.

7. Bremssystem (3) nach dem vorhergehenden Anspruch, das ferner eine manuelle Steuervorrichtung (29) zur Steuerung des Hauptbremskreises (5) aufweist, wobei die erste elektronische Steuervorrichtung (9) ausgelegt ist, um die manuelle Steuervorrichtung (29) zu unterstützen, indem sie einen zusätzlichen hydraulischen Druck in dem Hauptbremskreis (5) bereitstellt, wenn die manuelle Steuervorrichtung (29) durch einen manuellen Bremsbefehl einen Fahrers (C) betätigt wird.

8. Bremssystem (3) nach einem der vorhergehenden Ansprüche, das einen Bus für die Datenkommunikation (25) zwischen der ersten elektronischen Steuervorrichtung (9) und der zweiten elektronischen Steuervorrichtung (11) aufweist.

9. Kraftfahrzeug (1), bevorzugt ein autonomes Kraftfahrzeug, aufweisend ein Bremssystem (3) nach einem der vorhergehenden Ansprüche.

10. Verfahren zum Steuern eines Kraftfahrzeugs (1) nach dem vorhergehenden Anspruch oder eines Bremssystems (3) nach einem der Ansprüche 1 bis 8, wobei bei einem Schritt (100) zur Bremssteuerung:
- wenn eine Störung des Hauptbremskreises (5) erkannt wird (110), die erste elektronische Steuervorrichtung (9) einen Schritt (120) zur Notsteuerung des ersten elektrischen Aktuators (13) ausführt und die zweite elektronische Steuervorrichtung (11) einen Schritt (130) zur Notsteuerung des zweiten elektrischen Aktuators (15) ausführt.

11. Steuerungsverfahren zur Steuerung nach dem vorhergehenden Anspruch oder eines Kraftfahrzeugs (1) nach Anspruch 9 oder eines Bremssystems (3) nach einem der Ansprüche 1 bis 8, wobei bei einem Schritt (100') zur Bremssteuerung:
- wenn eine Störung der ersten elektronischen Steuervorrichtung (9) erkannt wird (140), die zweite elektronische Steuervorrichtung (11) einen Schritt zur Notsteuerung des ersten elektrischen Aktuators (13) ausführt,
- wenn eine Störung der zweiten elektronischen Steuervorrichtung (11) erkannt wird (160), die erste elektronische Steuervorrichtung (9) einen Schritt (170) zur Notsteuerung des zweiten elektrischen Aktuators (15) ausführt.

## Claims

1. Braking system (3) for a motor vehicle (1), **characterised in that** it comprises:
- a main braking circuit (5),
- an auxiliary electric braking circuit (7) configured to provide parking braking,
- a first electronic control device (9) which controls
i) the main braking circuit (5) to actuate a first braking member (F1) and a second braking member (F2), and
ii) in the auxiliary electric braking circuit (7), a first electric actuator (13) of the first braking member (F1), and
- a second electronic control device (11) which controls, in the auxiliary electric braking circuit (7), a second electric actuator (15) of the second braking member (F2).

2. Braking system (3) according to the preceding claim, which comprises:
- a first switch (35) comprising a primary input connected to the first electronic control device (9) and an output connected to the first electric actuator (13) of the first braking member (F1), the first switch (35) comprising an emergency input connected to the second electronic control device (11), the first switch (35) being configured to connect, in the event of failure of the first electronic control device (9), the second electronic control device (11) to the first electric actuator (13) of the first braking member (F1), and
- a second switch (37) comprising a primary input connected to the second electronic control device (11) and an output connected to the second electric actuator (15) of the second braking member (F2), the second switch (37) comprising an emergency input connected to the first electronic control device (9), the second switch (37) being configured to connect, in the event of failure of the second electronic control device (11), the first electronic control device (9) to the second electric actuator (15) of the second braking member (F2).

3. Braking system (3) according to any one of the preceding claims, wherein the first electronic control device (9) controls the first electric actuator (13) and the second electronic control device (11) controls the second electric actuator (15), to selectively perform parking braking and emergency driving braking.

4. Braking system (3) according to any one of the preceding claims, wherein the first braking member (F1) is configured to brake a first wheel (R1) of the motor vehicle, and the second braking member (F2) is configured to brake a second wheel (R2) of the motor vehicle different from the first wheel (R1), the first and second wheels (R1, R2) preferably being the rear wheels of the motor vehicle (1).

5. Braking system (3) according to any one of the preceding claims, wherein the first electronic control device (9) and the second electronic control device (11) each comprise a unit (19) for processing signals representative of the speed of rotation of the wheels (R1-R4) of the motor vehicle (1), and a dynamic braking management and electronic stability control unit (21).

6. Braking system (3) according to any one of the preceding claims, wherein the main braking circuit (5) is a hydraulic braking circuit which comprises a hydraulic actuator (12) for each braking member (F1-F4).

7. Braking system (3) according to the preceding claim, which further comprises a manual control device (29) for controlling the main braking circuit (5), the first electronic control device (9) being configured to assist the manual control device (29) by supplying additional hydraulic pressure in the main braking circuit (5) when the manual control device (29) is actuated by a manual braking control by a driver (C).

8. Braking system (3) according to any one of the preceding claims, which comprises a data communication bus (25) between the first electronic control device (9) and the second electronic control device (11).

9. Motor vehicle (1), preferably autonomous, comprising a braking system (3) according to any one of the preceding claims.

10. Method for controlling a motor vehicle (1) according to the preceding claim or a braking system (3) according to any one of claims 1 to 8, wherein during a braking control step (100):
- when a failure of the main braking circuit (5) is detected (110), the first electronic control device (9) applies a step (120) of emergency control of the first electric actuator (13) and the second electronic control device (11) applies a step (130) of emergency control of the second electric actuator (15).

11. Control method according to the preceding claim or method for controlling a motor vehicle (1) according to claim 9 or a braking system (3) according to any one of claims 1 to 8, wherein during a braking control step (100'):
- when a failure of the first electronic control device (9) is detected (140), the second electronic control device (11) applies a step of emergency control of the first electric actuator (13),
- when a failure of the second electronic control device (11) is detected (160), the first electronic control device (9) applies a step (170) of emergency control of the second electric actuator (15).
